# EUROPÄISCHE PATENTSCHRIFT

(11) **EP 2 917 880 B1**
(45) Veröffentlichungstag und Bekanntmachung des Hinweises auf die Patenterteilung: **07.06.2017**
(21) Anmeldenummer: 13802256.1
(22) Anmeldetag: 04.11.2013
(51) Int. Cl.: G06K 19/073, G06K 19/077

(54) **WERT- UND ODER SICHERHEITSPRODUKT MIT EINEM SCHUTZELEMENT FÜR EINEN HALBLEITER-CHIP**
VALUABLE AND/OR SECURITY PRODUCT HAVING A PROTECTIVE ELEMENT FOR A SEMICONDUCTOR CHIP
PRODUIT DE VALEUR ET/OU DE SÉCURITÉ DOTÉ D'UN ÉLÉMENT DE PROTECTION POUR UNE PUCE À SEMI-CONDUCTEUR

(30) Priorität: 08.11.2012 DE 102012220392
(43) Veröffentlichungstag der Anmeldung: 16.09.2015
(73) Patentinhaber: Bundesdruckerei GmbH, 10969 Berlin (DE)
(72) Erfinder: DÖRING, René, 13359 Berlin (DE); ROSSEK, Kai, 12349 Berlin (DE)
(74) Vertreter: Bressel, Burkhard
(86) Internationale Anmeldenummer: PCT/EP2013/072910
(87) Internationale Veröffentlichungsnummer: WO 2014/072241

(56) Entgegenhaltungen:
- EP-A2- 1 748 382
- WO-A1-2007/057325
- DE-A1-102004 031 879
- DE-A1-102007 016 777

## Beschreibung

Die vorliegende Erfindung betrifft ein Wert- und/oder Sicherheitsprodukt, beispielsweise einen Reisepass, Personalausweis, Führerschein oder eine andere ID-Karte oder ein Zahlungsmittel, insbesondere eine Banknote. Im Falle eines Personalausweises trägt dessen Vorderseite zum Beispiel das Lichtbild sowie den Namen des Inhabers. Derartige Dokumente werden typischerweise in normierten Formaten hergestellt, beispielsweise im ID 1-, ID 2- oder ID 3-Format gemäß ISO 7810. Die Dokumente können grundsätzlich aus einem organischen Polymer oder einem Keramikwerkstoff, Papier, Pappe oder aus Metall bestehen oder dieses enthalten. Karten und kartenförmige Bestandteile von buchartigen Dokumenten können vorzugsweise aus miteinander laminierten Polymerfolien hergestellt sein.

Erfindungsgemäß werden unter einem Halbleiter-Chip insbesondere elektronische Bauelemente verstanden, welche zur Speicherung und Verarbeitung von Daten geeignet sind. Beispielsweise handelt es sich um sogenannte RFID (Radio Frequency Identification Device)-Chips, welche zur kontaktlosen Kommunikation über eine Antenne mit einem Schreib- und Lesegerät geeignet sind. Ferner sind darunter auch Halbleiter-Chips zu verstehen, die mit einem externen Lese- oder Schreibgerät über elektrische Kontakte direkt in Verbindung bringbar sind, um eine Datenübertragung durchzuführen. Beispielsweise können derartige Chips z.B. nur eine Seriennummer enthalten und diese bei Aktivierung übermitteln, oder es kann sich um Chips mit einer Verschlüsselung handeln, die Daten nur nach einer Authentifizierung austauschen.

Ein Beispiel für ein Wert- oder Sicherheitsdokument ist in DE 10 2010 019 121 A1 angegeben. Dieses Dokument weist einen integrierten Schaltkreis und eine mit dem integrierten Schaltkreis verbundene Antenne auf. Der integrierte Schaltkreis ist über Anschlusskontakte mit der Antenne verbunden. Der integrierte Schaltkreis ist in Flip-Chip-Klebertechnik auf der Antenne montiert. Um den integrierten Schaltkreis optimal gegen Angriffe von außen zu schützen, weist das Dokument eine Abschirmung auf. Die Abschirmung ist durch einen Faradayschen Käfig oder durch jeweils eine weichmagnetische Ferrite enthaltende und den integrierten Schaltkreis beidseitig bedeckende Schicht oder durch eine Kombination dieser beiden Abschirmungen gebildet. In DE 10 2010 019 121 A1 ist ferner angegeben, dass metallische Strukturen im Bereich des sichtbaren Lichts reflektierende Eigenschaften aufweisen. Der Chip könne durch eine zusätzliche metallische Schicht auch gegen Lichteinstrahlung geschützt werden. Dieser Schutz könne beispielsweise durch eine Metallisierung realisiert werden.

In DE 10 2010 019 121 A1 wird angegeben, dass die dort beschriebene Abschirmung mittels des Faradyschen Käfigs für die Abschirmung niedriger Frequenzen sehr effizient ist, insbesondere für Mikrowellen, Radiowellen und elektrische Entladungen. Ferner wird angegeben, dass die für die Wechselwirkung mit dem magnetischen Feld der Strahlung wirksamen weichmagnetische Ferrite enthaltenden Schichten auch gegen eine Einstrahlung von Licht im sichtbaren Spektralbereich wirksam sind, da die Ferrite eine starke Absorption im sichtbaren Spektralbereich aufwiesen. Allerdings hat es sich herausgestellt, dass die bekannten Maßnahmen zum Schutz eines Halbleiter-Chips in einem Wert- und/oder Sicherheitsprodukt gegen Manipulation und/oder Reverse Engineering nicht ausreichend sicher sind. Ferner offenbart die DE 10 2004 031 879 A1 ein Wert- und/oder Sicherheitsprodukt gemäss dem Oberbegriff des Anspruchs 1.

Von daher liegt der vorliegenden Erfindung die Aufgabe zugrunde, weiter reichende Schutzmaßnahmen zu finden, mit denen auch mit anderen Mitteln durchgeführte Angriffe auf den Chip verhindert werden können. Insbesondere hat es sich herausgestellt, dass bei der Verwendung von ungehäusten Chips die Gefahr besteht, deren Architektur ausspionieren und ein Redesign durchführen und/oder darin enthaltene Teile, die der Verschlüsselung von Daten dienen, ausschalten zu können, sodass darin gespeicherte geschützte Daten ausgelesen werden können, oder diese Chipteile beispielsweise während des Betriebes verändern zu können, indem diese Teile durch die einfallende Strahlung beeinflusst werden. In letzterem Falle würde ein Eingriff in die Sicherheitsmechanismen des Chips vorliegen, sodass ein Datenaustausch dann problemlos auch ohne Authentifizierung möglich wäre. Derartige externe Zugriffe von außen sind also zu verhindern. Des Weiteren ist es wünschenswert, diese Schutzmaßnahmen möglichst einfach realisieren zu können.
Soweit in der Beschreibung und in den Ansprüchen der vorliegenden Anmeldung der Begriff ,Wert- und/oder Sicherheitsprodukt' verwendet wird, ist darunter insbesondere ein Wert- und/oder Sicherheitsdokument zu verstehen. Ein Wert- und/oder Sicherheitsdokument kann beispielsweise ein Reisepass, Personalausweis, Führerschein oder eine andere ID-Karte oder ein Zugangskontrollausweis, ein Fahrzeugschein, Fahrzeugbrief, Visum, Scheck, Zahlungsmittel, insbesondere eine Banknote, eine Scheck-, Bank-, Kredit- oder Barzahlungskarte, Kundenkarte, Gesundheitskarte, Chipkarte, ein Firmenausweis, Berechtigungsnachweis, Mitgliedsausweis, Geschenk- oder Einkaufsgutschein, Frachtbrief oder ein sonstiger Berechtigungsnachweis, Steuerzeichen, Postwertzeichen, Ticket, (Spiel-) Jeton, Haftetikett (beispielsweise zur Produktsicherung) oder ein anderes ID-Dokument sein. Das Wert- und/oder Sicherheitsprodukt kann beispielsweise eine Smartcard sein. Das Sicherheits- und/oder Wertdokument kann im ID 1-, ID 2-, ID 3- oder in irgendeinem anderen Format vorliegen, beispielsweise in Heftform, wie bei einem passähnlichen Gegenstand. Ein Sicherheits- und/oder Wertprodukt ist im Allgemeinen ein Laminat aus mehreren Dokumentenlagen, die passergenau unter Wärmeeinwirkung und unter erhöhtem Druck flächig miteinander verbunden sind. Diese Produkte sollen den normierten Anforderungen genügen, beispielsweise ISO 10373, ISO/IEC 7810, ISO 14443. Die Produktlagen bestehen beispielsweise aus einem Trägermaterial, das sich für eine Lamination eignet.
Die vorstehend angegebenen Aufgaben werden mit dem erfindungsgemäßen Wert- und/oder Sicherheitsprodukt gelöst, das mindestens einen in das Wert- und/oder Sicherheitsprodukt eingebetteten ungehäusten Halbleiter-Chip (bare die) aufweist. Ferner enthält das Produkt mindestens ein Schutzelement für den ungehäusten Halbleiter-Chip, d.h. zum Schutz des Halbleiter-Chips, welches durch einen Interferenzfilter für die eingestrahlte elektromagnetische Strahlung gebildet ist. Gemäß der vorliegenden Erfindung wird mit dem Schutzelement erreicht, dass einfallende Strahlung abgelenkt und/oder gefiltert und/oder reflektiert wird. Dadurch wird eine Abbildung der einfallenden Strahlung auf den Chip verhindert, sodass eine Positionierung eines einfallenden Strahles auf eine definierte Stelle des Chips abgewehrt wird. Unter anderen kann auf diese Weise selbst dann, wenn die einfallende Strahlung sehr intensiv ist, ein wirksamer Schutz erreicht werden, der von herkömmlichen Abschirmungen unter derartigen Bedingungen nicht mehr wirksam erfüllt werden kann. Denn bei Verwendung letzterer wird die einfallende Strahlung lediglich absorbiert, sodass die Abschirmung dann, wenn elektromagnetische Strahlung hoher Intensität eingesetzt wird, selbst beschädigt wird und die erforderliche Schutzfunktion dann nicht mehr übernehmen kann. Vorzugsweise lenkt die erfindungsgemäße Ausbildung des Schutzelements die einfallende Strahlung unabhängig von ihrer Intensität dagegen von einer geradlinigen Strahlungsführung ab, sodass die Strahlung in eine Richtung abgelenkt wird, in der sie den Chip nicht erreichen kann, oder eine beabsichtigte Abbildung der Chipstruktur misslingt überhaupt. Zumindest bei der Realisierung bestimmter Ausführungsformen der vorliegenden Erfindung (Verwendung von Mikrolinsen- und Mikroprismen-Arrays sowie eines Hologramms als Schutzelemente) kann das Schutzelement zusätzlich ein Sicherheitsmerkmal für das erfindungsgemäße Wert- und/oder Sicherheitsprodukt bilden. Damit werden die Herstellung des Produktes vereinfacht und deren Kosten verringert.

Die vorliegende Erfindung ist für den Schutz eines ungehäusten Halbleiter-Chips vorgesehen, d.h. eines Chips, der für die Integration in das Wert- und/oder Sicherheitsprodukt nicht in ein Einbettungsmaterial eingebettet ist, das zusammen mit dem Halbleiter-Chip ein Chipmodul bilden würde. Die Montage eines ungehäusten ("nackten") Chips in das Produkt weist den Vorteil auf, dass der Chip mechanisch wesentlich weniger anfällig gegen Beschädigungen ist als ein Modul, das wegen seiner Dicke starr und daher empfindlich gegenüber mechanischen Beanspruchungen, beispielsweise Verbiegungen, ist.

Der Halbleiter-Chip kann in herkömmlicher Art und Weise in das Dokument eingebracht sein, beispielsweise mittels Flip-Chip-Technik, zum Beispiel durch Aufsetzen des Chips auf Kontaktstellen einer auf einer Polymerlage des Wert- und/oder Sicherheitsproduktes gebildeten Antennenstruktur. Der Halbleiter-Chip weist hierzu eine mit Kontaktflächen, beispielsweise in Form von Kontakthöckern (Bumps), versehene Vorderseite sowie eine Rückseite auf. Die Rückseite kann mit einer metallischen Schicht versehen sein, die einen Angriff von dieser Seite aus verhindert. Auf der Vorderseite ist eine derartige durchgehende metallische Schicht jedoch nicht vorhanden, sodass dort die Chipstrukturen offenliegen. Der Halbleiter-Chip kann eine irgendwie geartete elektronische Schaltung aufweisen. Daher kann der Halbleiter-Chip in Form eines RFID-Chips, Mikroprozessors, internen oder externen Speichers, eines ausschließlich zur Verschlüsselung von Daten dienenden Chips oder dergleichen ausgebildet sein. Der Halbleiter-Chip kann in normal dicker Form (wie hergestellt) oder in einer abgedünnten Form vorliegen, beispielsweise mit einer Dicke von 50 bis 200 µm oder noch weiter bevorzugt von 75 bis 100 µm. Der Halbleiter-Chip ist mit zu den Oberflächen des Wert- und/oder Sicherheitsproduktes parallelen Außenflächen in dem Produkt angeordnet. Der Halbleiter-Chip befindet sich im Wert- und/oder Sicherheitsprodukt vorzugsweise innenliegend, d.h. in einer Ebene, die zu den Außenflächen des Produktes beabstandet ist, wobei auch die Vorder- und die Rückseite des Halbleiter-Chips zu den Außenflächen des Produktes vorzugsweise beabstandet sind.

In einer bevorzugten Weiterbildung der vorliegenden Erfindung ist das mindestens eine Schutzelement dazu ausgebildet, die Einstrahlung elektromagnetischer Strahlung zumindest mit einer Wellenlänge von größer als 800 nm, insbesondere von größer als 900 nm, besonders bevorzugt von mindestens 1000 nm, zu verhindern. Ferner liegt der Bereich, in dem das mindestens eine Schutzelement die Einstrahlung elektromagnetischer Strahlung wirksam verhindert, in einem Wellenlängenbereich, der unter 5000 nm, bevorzugt unter 3000 nm und am meisten bevorzugt bei maximal 2000 nm liegt.

Es hat sich nämlich überraschend herausgestellt, dass viele Materialien im infraroten Spektralbereich weitgehend transparent sind, beispielsweise auch übliche Druckschichten, die zum Verbergen der elektronischen Komponenten in einem Wert- und/oder Sicherheitsprodukt verwendet werden. Beispielsweise sind auch die für die Bildung eines derartigen Produktes verwendeten Polymermaterialien, beispielsweise Polycarbonat oder Polyethylenterephthalat, für Infrarotstrahlung transparent. Dies kann selbst dann gelten, wenn diese Materialien aufgrund von Füllstoffen für das menschliche Auge, d.h. bei Beleuchtung mit sichtbarem Licht und Betrachtung im sichtbaren Spektralbereich, opak erscheinen. Mit einer Thermokamera, die beispielsweise im Wellenlängenbereich von ungefähr 1000 bis 5000 nm empfindlich ist, beispielsweise mit einer Thermo-Lock-In-Kamera, ist der Chip auch unter für das menschliche Auge opaken Schichten erkennbar. Daher gelingt eine Einstrahlung von elektromagnetischer Strahlung mit derartiger Energie in herkömmliche Aufbauten typischerweise problemlos. Der Halbleiter-Chip selbst ist bei Verwendung einer Thermokamera in den Chipbereichen, in denen eine für die elektrische Stromleitung erforderliche Dotierung des Halbleitermaterials vorliegt, opak. Allerdings ist der gesamte übrige Bereich eines Silizium-Chips transparent. Da auf diese Art und Weise die Strukturen des Chips erkennbar werden, ist eine Ausforschung der Struktur oder eine Manipulation des Chips oder eine Beeinträchtigung des Prozessors grundsätzlich möglich. Diese Erkenntnis trägt die weitere Fortbildung der vorliegenden Erfindung, wonach das Schutzelement insbesondere dazu ausgebildet ist, den Einfall infraroter Strahlung auf den Halbleiter-Chip zu verhindern. Mit der Ausbildung des mindestens einen Schutzelements zur Verhinderung des Einfallens von Strahlung in dem angegebenen Infrarot-Wellenlängenbereich wird somit ein wirksamer Schutz insbesondere mit Angriffen entsprechender Strahlungsquellen und/oder bildgebenden Mittel, die in diesem Wellenlängenbereich arbeiten, verhindert, beispielsweise mit Lasern, die Strahlung im infraroten Spektralbereich aussenden, insbesondere mit einem Nd:YAG- oder mit einem Erbium dotierten Lithiumniobat-Laser.

In einem weiteren Fall ist das mindestens eine Schutzelement durch ein Mikrolinsenarray oder ein Mikroprismenarray gebildet. Derartige Einrichtungen sind dadurch gekennzeichnet, dass sie zur optischen Brechung ausgebildet sind, d.h. dass auf diese einfallende Strahlung optischer Brechung unterworfen ist. Die optische Brechung führt wiederum dazu, dass ein einfallender Strahl von der Einfallsrichtung abgelenkt wird.

Im Falle der Verwendung eines Mikroprismenarrays gilt dies insbesondere für Strahlung, die auf eine der Seiten der Mikroprismen, die parallel zur Oberseite des Wert- und/oder Sicherheitsproduktes angeordnet ist (Basisfläche), schräg einfällt. Dadurch kann ein einfallender Strahl den Halbleiter-Chip nicht erreichen. Beim senkrechten Strahleinfall auf die Basisflächen der Mikroprismen wird die Strahlung in den Mikroprismen totalreflektiert, wenn die Basisflächen der Mikroprismen parallel zur Oberseite des Produktes angeordnet sind und sich die jeweils anderen Prismenseiten in das Produkt hineinerstrecken. Dies gilt zumindest dann, wenn die Brechzahl des Materials der Mikroprismen bei der Wellenlänge der einfallenden Strahlung größer ist als die des darunter liegenden Produktmaterials. In diesem Falle kann die Strahlung den Halbleiter-Chip nicht erreichen.

Im Falle eines Mikrolinsenarrays, das gegenüber der Außenseite des Wert- und/oder Sicherheitsproduktes, in das es integriert ist, gegen die Senkrechte geneigte Linsenachsen der einzelnen Mikrolinsen aufweist, wird senkrecht auf die Oberfläche des Produktes einfallende Strahlung in den Mikrolinsen gebrochen, sodass der einfallende Strahl von der Normalen abgelenkt wird und dadurch den Halbleiter-Chip ebenfalls nicht erreichen kann. Wenn die Linsenachsen dagegen senkrecht zur Oberseite des Wert- und/oder Sicherheitsproduktes stehen, fällt die Strahlung zwar entlang der Achsen in das Produkt und kann gegebenenfalls den Chip erreichen. Allerdings ist nicht die gesamte Chipfläche problemlos erreichbar sondern lediglich die durch das Linsenraster vorgegebenen Abbildungsorte auf dem Chip, die durch den Fokus der Linsen gebildet sind. Auch unter einem Winkel von < 90° zur Oberseite des Wert- und/oder Sicherheitsproduktes einfallende Strahlen werden in den Mikrolinsen gebrochen und erreichen den Halbleiter-Chip nicht oder nur an diskreten Orten. Vorzugsweise liegt der Halbleiter-Chip nicht in der Fokalebene der Mikrolinsen.

Das Mikrolinsenarray ist vorzugsweise aus einer Vielzahl von rasterartig zueinander angeordneten Mikrolinsen gebildet. Die Linsenachsen sind vorzugsweise parallel zueinander ausgerichtet. Die Mikrolinsen können eindimensionale, d.h. langgestreckte, optische Elemente sein, beispielsweise Zylinderlinsen, sodass der jeweilige Fokus einer Mikrolinse auf einer Linie liegt. In diesem Falle bilden die Mikrolinsen keine rotationssymmetrischen sondern spiegelsymmetrische Oberflächen aus. Mehrere derartige eindimensionale optische Elemente können parallel zueinander angeordnet sein und eine Fläche der Oberseite des Wert- und/oder Sicherheitsproduktes vorzugsweise lückenlos abdecken. Dadurch ergeben sich parallel zueinander verlaufende Fokuslinien unterhalb des Mikrolinsenarrays. Alternativ dazu können die Mikrolinsen auch nulldimensionale, d.h. räumlich begrenzte, optische Elemente sein (kalottenförmige, insbesondere kugelkalottenförmige (sphärische), Linsen). Diese Elemente können beispielsweise in einem regelmäßigen Raster, beispielsweise in parallel zueinander verlaufenden Reihen mit versetzt zueinander angeordneten Mikrolinsen in den Reihen, angeordnet sein und dadurch eine Fläche der Oberseite des Wert- und/oder Sicherheitsproduktes vorzugsweise ebenfalls lückenlos ausfüllen. In letzterem Falle fokussieren die Mikrolinsen punktförmig, sodass sich ein entsprechendes Raster der Fokuspunkte ergibt. Die optischen Achsen der Mikrolinsen erstrecken sich bevorzugt senkrecht zur Oberseite des Wert- und/oder Sicherheitsproduktes. Die Mikrolinsen können beispielsweise jeweils zumindest eine konvexe Seite aufweisen. Diese konvexen Seiten sind entweder zur Außenseite des Wert- und/oder Sicherheitsproduktes oder zum Halbleiter-Chip hin gerichtet.

Wie für die Mikrolinsen können entsprechende Formen und Anordnungen auch für die Mikroprismen ausgewählt werden: Das Mikroprismenarray ist ebenfalls vorzugsweise aus einer Vielzahl von rasterartig zueinander angeordneten Mikroprismen gebildet. Vorzugsweise ist jeweils eine der Mikroprismenseiten (Basisfläche) parallel zur Oberseite des Wert- und/oder Sicherheitsproduktes angeordnet, während sich die anderen Mikroprismenseiten in das Produktinnere hinein (vom einfallenden Strahl weggerichtet) erstrecken. Insbesondere kann die Winkelhalbierende zwischen den jeweils beiden anderen Seiten senkrecht zur Oberfläche des Wert- und/oder Sicherheitsproduktes stehen. Mehrere derartige langgestreckte Mikroprismen können parallel zueinander angeordnet sein und eine Fläche der Oberseite des Wert- und/oder Sicherheitsproduktes vorzugsweise lückenlos abdecken.

Die Mikroprismen- und Mikrolinsenarrays können zusätzlich in Form von Sicherheitsmerkmalen für das Wert- und/oder Sicherheitsdokument ausgebildet sein. Beispielsweise kann ein Mikrolinsenarray mit den für ein Kippbild (CLI, MLI) erforderlichen weiteren Komponenten komplettiert sein, beispielsweise mit einer Strahlungsquelle, insbesondere mit einem Laser, in einer Ebene unterhalb des Mikrolinsenarrays, insbesondere in der Fokalebene, gebildete Schwärzungen innerhalb des Polymermaterials des Wert- und/oder Sicherheitsproduktes, die unter verschiedenen Winkeln in das Material des Produktes eingebracht sind, sodass diese anschließend unter diesen Winkeln wahrnehmbar sind. Diese Schwärzungen können verschiedene Darstellungen (Informationen) wiedergeben. Alternativ können auch mehrere Darstellungen mittels eines Druckverfahrens in einer Ebene unterhalb des Mikrolinsenarrays gebildet werden. Das Mikroprismenarray stellt für sich genommen ein Sicherheitsmerkmal dar, da das Mikroprismenarray durch eine Totalreflexion an den beiden Prismenflächen, die zu der jeweiligen Basisfläche benachbart sind und sich in das Produkt hinein erstrecken, in bestimmten Winkelbereichen des einfallenden Lichts relativ zur Oberfläche des Produktes reflektierend und in anderen Winkelbereichen transparent erscheint. Das Mikroprismenarray kann zusätzlich in einer Ebene unter dem Array weitere Elemente aufweisen, die Informationen wiedergeben.
Die Mikrolinsen- und Mikroprismenarrays können beispielsweise mit einem Prägeverfahren aus einem Polymermaterial gebildet werden, wobei das Polymermaterial eine Brechzahl aufweist, die sich von der Brechzahl von darüber und darunter befindlichem Material unterscheidet und weiter bevorzugt größer als diese ist. Beispiele für derartige Arrays und insbesondere deren Herstellung sind in DE 10 2007 007 914 A1 und US 2008/0231976 A1 angegeben. Letzteres Dokument gibt zusätzlich zu einem einzelnen Prismenarray auch eine Mehrzahl von Anordnungen von mehreren Prismenarrays, die nebeneinander und/oder übereinander in ein Sicherheitselement integriert sind, an. Der Offenbarungsgehalt der vorgenannten Dokumente wird hiermit vollumfänglich in die vorliegende Anmeldung aufgenommen. Die Mikrolinsen- oder Mikroprismenarrays können zunächst separat hergestellt und anschließend auf den Wert- und/oder Sicherheitsproduktkörper aufgebracht und mit diesem verbunden werden. Die Arrays können auch auf oder in dem Körper erzeugt werden, beispielsweise in einem Prägeverfahren.

In der vorliegenden Erfindung ist das mindestens eine Schutzelement durch einen Interferenzfilter für die eingestrahlte elektromagnetische Strahlung gebildet. Ein Interferenzfilter ist dadurch gekennzeichnet, dass unter einem vorgegebenen Einfallswinkel einfallende Strahlung, die eine vorgegebene Wellenlänge (Frequenz, Energie) hat, durch Interferenz mit in dem Filter teilreflektierten Strahlen ausgelöscht wird. Bevorzugt handelt es sich um einen Bandsperrfilter, d.h. der Interferenzfilter hat für Strahlung eines bestimmten Wellenlängenbereiches eine geringe Transmission, während Strahlung größerer und kleinerer Wellenlänge durchgelassen wird. Ein Interferenzfilter ist hierzu mit mehreren teilreflektierenden Schichten oder teilreflektierenden Grenzflächen, die zueinander beabstandet sind, gebildet. Hierzu ist das mindestens eine Schutzelement durch eine Abfolge mehrerer Schichten gebildet, in der beispielsweise teilreflektierende Schichten mit dielektrischen Schichten abwechseln oder in der beispielsweise dielektrische Schichten mit unterschiedlicher Brechzahl bzw. mit optisch unterschiedlicher Dichte abwechseln. Typischerweise ist ein Interferenzfilter aus zwei teilreflektierenden Schichten und einer dazwischen angeordneten dielektrischen Schicht gebildet. Teilreflektierende Grenzflächen können auch durch aneinander angrenzende dielektrische Lagen gebildet sein, die unterschiedliche Brechzahlen aufweisen. Allerdings ist die Verwendung von teilreflektierenden Schichten, die aus Metall gebildet sind, bevorzugt. Durch Teilreflexion an den teilflektierenden Schichten entstehen durch Einkoppelung einfallender Strahlen in das Interferenzfilter miteinander interferierende Strahlen, die sich unter bestimmten Bedingungen auslöschen. Der Raum zwischen zwei teilreflektierenden Schichten, der durch die dielektrische Schicht gebildet ist, bildet einen optischen Resonator. Die Strahlen werden dann, wenn sie abweichend von der Flächennormalen des Interferenzfilters in den Filter eingekoppelt werden, beim Einfallen in den Filter und beim Verlassen des Filters gebrochen. Durch Teilreflexion findet Interferenz der teilflektierten Strahlen statt, die sich unter bestimmten Bedingungen auslöschen. Hierzu ist in Abhängigkeit von der Energie der einfallenden Strahlung insbesondere der Abstand der teilreflektierenden Schichten voneinander einzustellen. Deren Abstand sollte ungefähr der Hälfte der Wellenlänge der einfallenden Strahlung entsprechen, d.h. für Infrarotstrahlung mit einer Wellenlänge von 1000 bis 5000 nm ungefähr 0,5 bis 3 µm betragen. Durch die auslöschende Interferenz erreicht die einfallende Strahlung den Halbleiter-Chip nicht. Die teilreflektierenden Schichten oder Grenzflächen sind vorzugsweise parallel zur Oberfläche des Wert- und/oder Sicherheitsproduktes angeordnet.

Der Interferenzfilter ist vorzugsweise aus einer ersten dem einfallenden Strahl zugewandten teilreflektierenden Schicht, einer darunter (in Strahlrichtung) liegenden dielektrischen Schicht und einer unter dieser (wiederum in Strahlrichtung) liegenden zweiten teilreflektierenden Schicht gebildet. Beispielsweise wird der Interferenzfilter durch Aufbringen von zwei teilreflektierenden Schichten auf die beiden Oberflächen einer Lage einer dielektrischen Lage erzeugt. Diese Lage kann in das Wert- und/oder Sicherheitsprodukt integriert werden. Hierzu wird der Interferenzfilter in üblicher Art und Weise mit den übrigen Komponenten des Wert- und/oder Sicherheitsproduktes verbunden. Die dielektrischen Lagen sind für die einfallende Strahlung transparent oder zumindest teiltransparent. Sie sind vorzugsweise aus demselben Material gebildet, aus dem das Wert- und/oder Sicherheitsprodukt gebildet ist. Beispielsweise ist das dielektrische Material aus einem Polymermaterial gebildet, beispielsweise aus Polycarbonat oder Polyethylenterephthalat. Die teilreflektierenden Schichten sind vorzugsweise aus Metall gebildet, beispielsweise aus Silber oder Aluminium. Alternativ können auch mehrere Polymerlagen mit unterschiedlicher Brechzahl miteinander verbunden werden, sodass Teilreflexion an den innen liegenden Grenzflächen stattfindet.

In einem anderen Fall ist das mindestens eine Schutzelement durch ein Hologramm gebildet. In diesem Falle ist auf das Wert- und/oder Sicherheitsprodukt einfallende Strahlung durch das mindestens eine Schutzelement optischer Beugung unterworfen. Durch geeignete Gestaltung des Hologramms kann die auf das Produkt einfallende Strahlung in dem darunter liegenden Bereich, in dem der Halbleiter-Chip angeordnet ist, durch Interferenz eine Auslöschung erfahren, sodass die einfallende Strahlung den Chip auch in diesem Falle nicht erreicht. Das Hologramm kann ein Volumenhologramm oder ein Flächenhologramm sein. Vorzugsweise ist es ein Volumenhologramm. Ein Beispiel für ein Hologramm und dessen Herstellung ist beispielsweise in EP 0 896 260 A2 angegeben, dessen Offenbarungsgehalt hiermit vollumfänglich in die vorliegende Anmeldung aufgenommen wird.

In einer weiteren bevorzugten Weiterbildung der vorliegenden Erfindung ist das mindestens eine Schutzelement in einer den mindestens einen Halbleiter-Chip einseitig abdeckenden Position angeordnet, d.h. es ist relativ zu dem Halbleiter-Chip derart angeordnet, dass es sich vollständig über eine Projektion des Halbleiter-Chips auf die Ebene, in der sich das Schutzelement befindet, erstreckt. Dies schließt nicht aus, dass das Schutzelement noch größer ist und sich daher über eine größere Fläche als die durch den Halbleiter-Chip eingenommene Fläche erstreckt. Hierzu ist das Schutzelement vorzugsweise über dem Halbleiter-Chip angeordnet. Das Schutzelement erstreckt sich demnach zumindest über die gesamte Seite des Halbleiter-Chips, um diesen abzudecken. Beispielsweise kann das Schutzelement in einer Ebene in dem Wert- und/oder Sicherheitsprodukt angeordnet sein, die zu der zu schützenden Seite des Halbleiter-Chips beabstandet ist. Alternativ kann das Schutzelement auf der Seite des Halbleiter-Chips aufliegend angeordnet sein. Dadurch wird der Halbleiter-Chip von der genannten Seite des Chips aus geschützt. Vorzugsweise befindet sich das Schutzelement an der Vorderseite des Halbleiter-Chips (Substratseite), auf der sich auch die Kontaktflächen des Chips befinden.

In einer weiteren bevorzugten Weiterbildung der vorliegenden Erfindung weist das Wert- und/oder Sicherheitsprodukt mindestens zwei Schutzelemente auf, von denen jeweils mindestens eines in einer den Halbleiter-Chip auf dessen Vorderseite und jeweils mindestens eines in einer den Halbleiter-Chip auf dessen Rückseite abdeckenden Position angeordnet sind. Ebenso wie im Falle einer einseitig abdeckenden Position sind die mindestens zwei Schutzelemente in dieser Weiterbildung der vorliegenden Erfindung in beidseitig abdeckenden Positionen relativ zu dem Halbleiter-Chip derart angeordnet, dass sie sich vollständig über eine Projektionsfläche des Halbleiter-Chips auf die beiden Ebenen, in denen sich die mindestens zwei Schutzelemente befinden, erstrecken. Auch dies schließt wiederum nicht aus, dass die mindestens zwei Schutzelemente größer sind als dem Halbleiter-Chip entspricht. Auch in diesem Falle können die mindestens zwei Schutzelemente von den beiden Seiten des Halbleiter-Chips beabstandet oder an diesen anliegend angeordnet sein, oder eines ist beabstandet, und das andere liegt am Halbleiter-Chip an.

Grundsätzlich kann auch mindestens ein Schutzelement vorgesehen sein, dass den Halbleiter-Chip allseitig schützt.

In einer weiteren bevorzugten Weiterbildung der vorliegenden Erfindung ist das mindestens eine Schutzelement in einer in dem Wert- und/oder Sicherheitsprodukt innenliegenden Ebene angeordnet. Dadurch wird es für eine Person, die das Produkt zu fälschen oder zu verfälschen oder die Daten in dem Halbleiter-Chip auszulesen oder zu manipulieren versucht oder einen Versuch unternimmt, die innere Struktur des Halbleiter-Chips für ein Redesign zu ermitteln, oder bestimmte Chipteile durch einfallende Strahlung auszuschalten oder zu manipulieren, äußerst schwierig, den mit dem mindestens einen Schutzelement geschaffenen Schutzmechanismus zu umgehen. Denn hierzu müsste diese Person das Schutzelement selbst manipulieren, beispielsweise entfernen oder zerstören. Für eine derartige Maßnahme wäre es erforderlich, das Schutzelement freizulegen, was wegen seiner innenliegenden Position praktisch unmöglich ist, zumindest wenn die Manipulation unbemerkt bleiben soll. Hierzu wird es beispielsweise zunächst auf die Oberfläche einer Lage des Wert- und/oder Sicherheitsprodukts aufgebracht, die anschließend mit einem oder mehreren anderen Lagen zusammengetragen wird, sodass die mit dem mindestens einen Schutzelement versehene Oberfläche innenliegend angeordnet ist. Die Produktlagen werden dann unlösbar miteinander verbunden, beispielsweise durch Laminieren. Alternativ befindet sich das Schutzelement zunächst an der Oberfläche eines das Wert- und/oder Sicherheitsprodukt bildenden Körpers und wird anschließend mit einem Schutzlack überzogen. Dieser schützt zum einen das Schutzelement gegen die vorgenannten Eingriffe und liefert darüber hinaus eine Abrieb- und Kratzfestigkeit der Oberfläche des Produktes. Der Schutzlack kann so dünn sein, dass das Profil der durch Mikrolinsen- oder Mikroprismenarrays gebildeten optischen Elemente außenseitig nachgebildet wird, sodass es für den Brechungseffekt mittels dieser Elemente auf den Brechzahlunterschied gegenüber Luft ankommt.

Wenn sich das mindestens eine Schutzelement in einer innenliegenden Ebene im Wert- und/oder Sicherheitsprodukt befindet, kann es unter einer, von einer Betrachterseite aus gesehen, darüber liegenden Lage oder Schicht des Produktes angeordnet sein. Diese darüber liegende Lage oder Schicht kann bei Betrachtung im sichtbaren Spektralbereich, d.h. mit dem menschlichen Auge, opak sein, sodass das Schutzelement für einen Betrachter verborgen ist.

In einer weiteren bevorzugten Weiterbildung der vorliegenden Erfindung ist der Halbleiter-Chip ein RFID-Chip. Das Wert- und/oder Sicherheitsprodukt kann in diesem Falle eine Smartcard sein. Damit der RFID-Chip mit einem externen Lese- und/oder Schreibgerät Daten austauschen kann, ist der Chip mit einer Antenne für den kontaktlosen Datenaustausch elektrisch verbunden. Hierzu sind die Kontaktflächen des Chips mit Kontaktstellen der Antenne elektrisch verbunden. Beispielsweise ist die Antenne in Form einer mehrere Windungen aufweisenden Spirale gebildet, die vorzugsweise auf einer Oberfläche einer Lage des Wert- und/oder Sicherheitsproduktes angeordnet ist. Die Spiralwindungen verlaufen vorzugsweise parallel zu den Produkträndern. Die Enden der spiralförmigen Leiterbahn können beispielsweise die Kontaktstellen darstellen. Der Chip kann vorzugsweise in Flip-Chip-Technik auf der Antenne montiert sein. Hierzu wird er vorzugsweise mittels eines anisotropen Leitklebers auf die Kontaktstellen der Antenne geklebt. Der Chip wird mit seinen Kontaktflächen passergenau auf die Kontaktstellen der Antenne montiert. Die Windungen der Antenne können zwischen den Kontaktflächen des Chips hindurchgeführt sein. Ein Beispiel für eine derartige Anordnung ist in DE 10 2010 019 121 A1 dargestellt.

Das Trägermaterial, auf dem der mindestens eine Halbleiter-Chip aufgebracht ist, ist Bestandteil des Wert- und/oder Sicherheitsprodukts. Beispielsweise handelt es sich um eine Trägermateriallage, die mit weiteren Trägermateriallagen zu einem Stapel zusammengetragen und dann mit diesen weiteren Lagen beispielsweise in einem Laminierverfahren verbunden wird, um das Wert- und/oder Sicherheitsdokument zu bilden. Für die Lamination kann ein herkömmliches Heiß/Kalt-Laminierverfahren eingesetzt werden.

Das Wert- und/oder Sicherheitsprodukt kann aus einem Polymer gebildet sein, das ausgewählt ist aus einer Gruppe, umfassend Polycarbonat (PC), insbesondere Bisphenol A-Polycarbonat, Polyethylenterephthalat (PET), deren Derivate, wie Glykol-modifiziertes PET (PETG), Polyethylennaphthalat (PEN), Polyvinylchlorid (PVC), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polyethylen (PE), thermoplastische Elastomere (TPE), insbesondere thermoplastisches Polyurethan (TPU), Acrylnitril-Butadien-StyrolCopolymer (ABS) sowie deren Derivate, und/oder Papier. Außerdem kann das Produkt auch aus mehreren dieser Materialien hergestellt sein. Bevorzugt besteht es aus PC oder PC/TPU/PC. Die Polymere können entweder ungefüllt oder gefüllt vorliegen. Im letzteren Falle sind sie vorzugsweise transparent oder transluzent. Falls die Polymere gefüllt sind, sind sie beispielsweise opak. Die vorstehenden Angaben beziehen sich sowohl auf miteinander zu verbindende Folien als auch auf Flüssigformulierungen, die auf ein Vorprodukt aufgebracht werden, wie einen Schutzlack. Bevorzugt wird das Produkt aus 3 bis 12, vorzugsweise 4 bis 10 Folien, hergestellt. Ein solcherart gebildetes Laminat kann abschließend ein- oder beidseitig mit einem Schutzlack überzogen werden. Derart gebildete Overlaylagen schützen ein darunter angeordnetes Sicherheitsmerkmal und/oder verleihen dem Dokument die erforderliche Abriebfestigkeit. Das Sicherheitsmerkmal ist vorzugsweise auf einer der inneren Lagen gebildet.

Das Wert- und/oder Sicherheitsdokument kann zusätzlich zu den gegebenenfalls als Sicherheitsmerkmale ausgebildeten Schutzelementen, beispielsweise einem Mikrolinsenarray, einem Mikroprismenarray oder einem Hologramm, weitere Sicherheitsmerkmale aufweisen, beispielsweise Melierfasern, Guillochen, Mikroschrift, Muster in lumineszierenden Farben und dergleichen. Ferner kann das Dokument auch noch andere elektrische Komponenten aufweisen als den mindestens einen Halbleiter-Chip, nämlich elektronische Anzeigeelemente, LEDs, berührungsempfindliche Sensoren und dergleichen. Die elektrischen Komponenten können beispielsweise zwischen zwei für das menschliche Auge opaken Lagen des Dokuments versteckt angeordnet sein.

Zur näheren Erläuterung der Erfindung dienen nachfolgend beschriebene Figuren.
- Fig. 1: zeigt ein erfindungsgemäßes Wert- und/oder Sicherheitsprodukt in Form einer Identifikationskarte in einer schematischen isometrischen Ansicht;
- Fig. 2: zeigt einen schematischen Teilschnitt entlang I-I gemäß Fig. 1 durch das Wert- und/oder Sicherheitsprodukt in einer ersten Ausführungsform; (A) mit einem einseitigen Schutz; (B) mit einem zweiseitigen Schutz;
- Fig. 3: zeigt einen schematischen Teilschnitt entlang I-I gemäß Fig. 1 durch das Wert- und/oder Sicherheitsprodukt in einer zweiten Ausführungsform; (A) mit einem einseitigen Schutz; (B) mit einem zweiseitigen Schutz;
- Fig. 4: zeigt einen schematischen Teilschnitt entlang I-I gemäß Fig. 1 durch das Wert- und/oder Sicherheitsprodukt in einer dritten Ausführungsform; (A) mit einem einseitigen Schutz; (B) mit einem zweiseitigen Schutz;
- Fig. 5: zeigt einen schematischen Teilschnitt entlang I-I gemäß Fig. 1 durch das Wert- und/oder Sicherheitsprodukt in einer vierten Ausführungsform; (A) mit einem einseitigen Schutz; (B) mit einem zweiseitigen Schutz;
- Fig. 6: zeigt einen schematischen Schnitt durch zwei Mikro-Stabprismen eines Mikro-Stabprismenarrays an der Oberseite eines Wert- und/oder Sicherheitsproduktes mit aus unterschiedlichen Richtungen einfallender Strahlung;
- Fig. 7: zeigt einen schematischen Schnitt durch zwei Mikro-Stablinsen eines Mikro-Stablinsenarrays an der Oberseite eines Wert- und/oder Sicherheitsproduktes mit von oben einfallender Strahlung.

In den Figuren bezeichnen gleiche Bezugszeichen Elemente mit derselben Funktion und/oder gleiche Elemente.

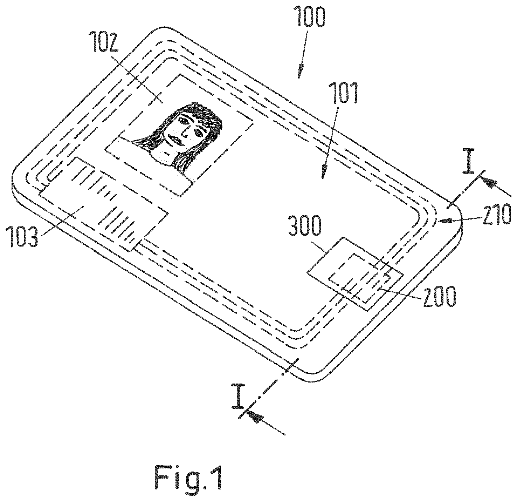

Das erfindungsgemäße Wert- und/oder Sicherheitsprodukt 100 ist im vorliegenden Beispiel eine Identifikationskarte, beispielsweise ein Personalausweis (Fig. 1). Grundsätzlich kann es sich aber auch um ein anderes Dokument handeln. Die Identifikationskarte hat eine Vorderseite 101 und eine Rückseite (nicht dargestellt). Das Dokument ist aus mehreren Polycarbonatlagen hergestellt, die durch Laminieren zu einem monolithischen Verbund miteinander verbunden sind. An der Vorderseite weist das Dokument Personalisierungsdaten auf, im vorliegenden Falle in einem ersten Feld 102 ein Gesichtsbild der Person, der die Karte zugeordnet ist, sowie ein weiteres Datenfeld 103, in dem Daten der Person in Klarschrift und/oder in kodierter Form gedruckt enthalten sind, beispielsweise der Name und das Geburtsdatum dieser Person. Die Karte kann weitere Sicherheitsmerkmale aufweisen, die aber der Übersichtlichkeit der Darstellung halber nicht wiedergegeben sind.

Lediglich strichliert angedeutet ist ein Halbleiter-Chip 200 in Form eines ungehäusten gedünnten RFID-Chips (Dicke beispielsweise 80 µm) sowie einer mit diesem verbundenen Antenne 210, die durch mehrere spiralförmige Windungen eines Leiterzuges gebildet ist, beispielsweise gedruckt mittels einer Leitsilberpaste. Diese beiden Elemente befinden sich innenliegend in dem Dokument. Der Antennenleiterzug kann beispielsweise mittels eines metallgefüllten Leitlackes auf einer Innenlage der Karte durch Drucken erzeugt sein. Jeweils eine der Kontaktflächen des Chips (nicht dargestellt) ist mit den Enden des Antennen-Leiterzuges, die Kontaktstellen für die elektrische Kontaktierung darstellen, verbunden. Daher befinden sich die Kontaktstellen zwischen dem Chip und der Antenne.

Ferner ist ein Schutzelement 300 für den RFID-Chip 200 dargestellt. Das Schutzelement kann an der Oberseite 101 der Karte 100 freiliegen, oder es befindet sich in einer innenliegenden Ebene. Beispielsweise kann die Karte nach der Lamination noch mit einem Schutzlack überzogen werden, der auch das Schutzelement bedeckt.

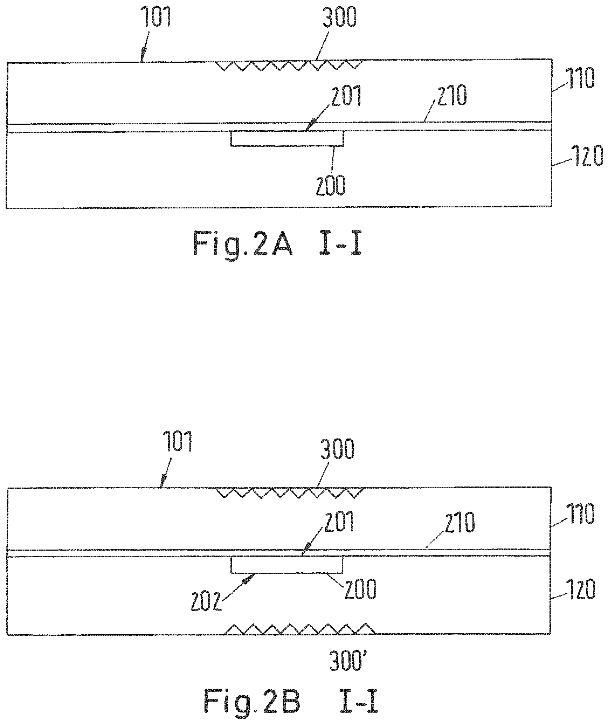

In den nachfolgend erläuterten Fig. 2 bis 5 sind mehrere Ausführungsformen des erfindungsgemäßen Schutzelements 300 für den RFID-Chip 200 zusammen mit diesem und der Antenne 210 dargestellt. Diese Figuren sind jeweils Teilschnitte durch die in Fig. 1 dargestellte Karte entlang I-I. In den Figuren sind jeweils der Chip und der AntennenLeiterzug dargestellt. Der Schnitt zeigt einen durchgehenden Ast des Leiterzuges, der über dem Chip verläuft, ohne dort mit ihm in elektrischen Kontakt zu kommen. Der Chip ist lediglich mit den Antennenenden verbunden, die sich nicht in den gezeigten Schnittebenen befinden.

Fig. 2A zeigt eine erste Ausführungsform der vorliegenden Erfindung. Der RFID-Chip 200 und die Antenne 210 sind zunächst auf einer ersten Polycarbonatlage 110, die eine Trägerlage darstellt, montiert. Diese Trägerlage wird dann mit einer weiteren Polycarbonatlage 120 zu einem Stapel zusammengetragen und zu dem monolithischen Verbund laminiert. Die Träger-Polycarbonatlage 110 und die weitere Polycarbonatlage 120 können jeweils selbst aus mehreren Lagen bestehen. Der Verbund bildet dann ein erfindungsgemäßes Wert- und/oder Sicherheitsdokument, beispielsweise die in Fig. 1 gezeigte Karte 100.

In der ersten Ausführungsform ist das Schutzelement 300 aus einem Mikroprismenarray beispielsweise aus parallel zueinander angeordneten und aneinander anliegenden Mikrostabprismen, deren Basisflächen mit der Außenseite 101 der Karte 100 bündig abschließen und deren weitere Prismenflächen sich in die Karte hinein erstrecken, gebildet. Das Mikroprismenarray liegt daher an der Oberfläche 101 der Karte 100 frei (Fig. 2A) oder kann alternativ mit einer Schutzlackschicht überzogen sein (nicht dargestellt). Das Mikroprismenarray ist oberhalb des RFID-Chips 200 angeordnet und erstreckt sich über die gesamte (Projektions-)Fläche des Chips und seitlich darüber hinaus. Es liegt auf der Vorderseite 201 des Chips, an der sich auch die Kontaktflächen für die Kontaktierung mit der Antenne 210 befinden.

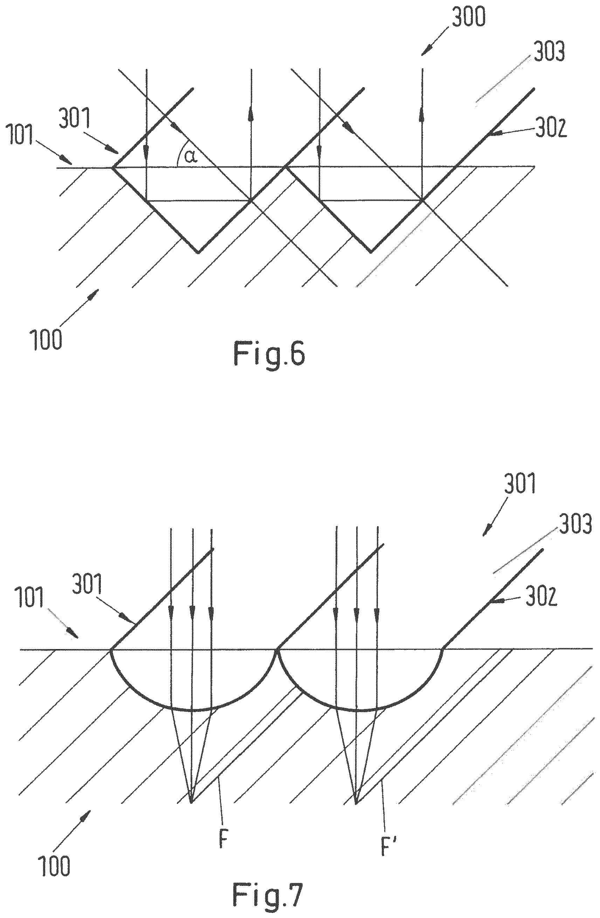

Das Mikroprismenarray 300 besteht aus mehreren parallel zueinander angeordneten und sich berührenden Stabprismen 301, 302 (Fig. 6; dort sind nur zwei nebeneinander liegende Prismenstäbe gezeigt; ein Array besteht aus einer Vielzahl von derartigen Stäben), deren Basisflächen 303 parallel zur Oberseite 101 der Karte 100 und mit dieser bündig abschließend angeordnet sind. Die Brechzahl des Materials der Mikroprismen ist größer als die Brechzahl des angrenzenden Polymermaterials der Karte. Oberhalb des Mikroprismenarrays befindet sich Luft, da sich das Mikroprismenarray an der Oberseite der Karte und damit nicht innenliegend in der Karte befindet.

Bei Einstrahlung von Licht, insbesondere von Infrarotstrahlung, senkrecht auf die Oberseite 101 der Karte 100 und damit senkrecht auf die Basisflächen 303 der Mikroprismen 301, 302 wird in die Prismen einfallende Strahlung in den Prismen totalreflektiert, da die Brechzahl des Materials der Mikroprismen bei der Wellenlänge der einfallenden Strahlung größer ist als die Brechzahl des darunter liegenden Polymermaterials der Karte. Bei einem Einfallswinkel α der Strahlung in einem Winkel < 90° zu den Basisflächen wird die Strahlung in eine Richtung seitlich des darunter angeordneten RFID-Chips (nicht dargestellt) abgelenkt, sodass die Strahlung den Chip nicht erreichen kann.

In einer Alternative der ersten Ausführungsform zu der in Fig. 2A gezeigten Variante sind zwei Schutzelemente 300, 300' vorgesehen, von denen sich das erste oberhalb des Chips 200 und das zweite unterhalb des Chips befindet (Fig. 2B). Sie erstrecken sich ebenfalls über die gesamte (Projektions-)Fläche des Chips und seitlich darüber hinaus. Auch in diesem Falle werden die Schutzelemente durch Mikroprismenarrays gebildet. Bezüglich der Schutzfunktion der beiden Schutzelemente gilt das zur Variante von Fig. 2A gesagte entsprechend.

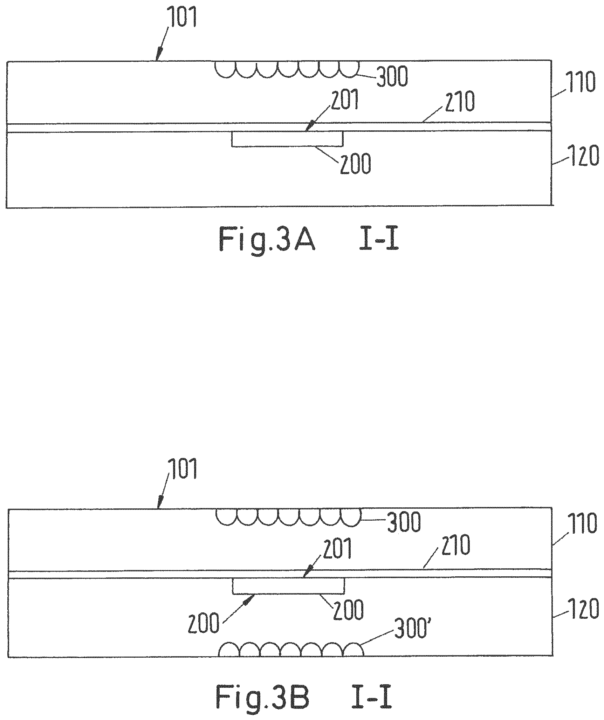

In Fig. 3A ist eine weitere Ausführungsform eines die Vorderseite 201 des RFID-Chips 200 einseitig abdeckenden Schutzelements 300, in diesem Falle in Form eines Mikrolinsenarrays gezeigt. Die Mikrolinsen 301, 302 sind durch langgestreckte Körper mit linsenförmiger Oberfläche, die mit einer Basisfläche 303 an der Oberseite 101 des Dokuments 100 liegen und mit dieser bündig abschließen, gebildet (Fig. 7; dort sind nur zwei nebeneinander liegende Linsenstäbe gezeigt; ein Array besteht aus einer Vielzahl von derartigen Stäben). In das Array einfallende Strahlung wird in eine Ebene unterhalb des Arrays fokussiert. Durch die rasterartige Anordnung der Einzel-Mikrolinsen in Form von Stablinsen, beispielsweise Zylinderlinsen, bilden sich im Dokumenteninneren jeweils Fokuslinien F, F', die im Raster der Stablinsen zueinander beabstandet sind, während dazwischen liegende Bereiche von der einfallenden Strahlung nicht erfasst werden.

In Fig. 3B ist eine Alternative zu der in Fig. 3A gezeigten Ausführungsform mit zwei derartigen Schutzelementen 300, 300', einem Mikrolinsenarray oberhalb und einem Mikrolinsenarray unterhalb des RFID-Chips 200, dargestellt. Das obere Mikrolinsenarray 300 schützt die Vorderseite 201 des RFID-Chips 200, und das untere Mikrolinsenarray 300' schützt die Rückseite 202 des Chips.

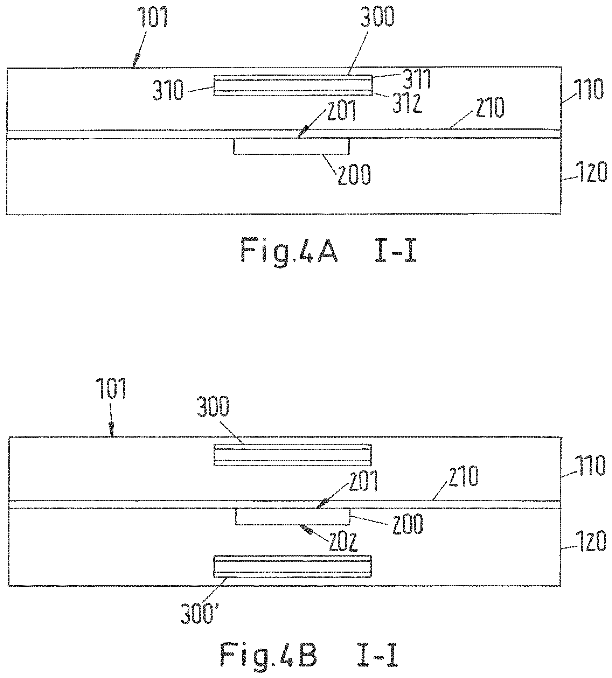

In Fig. 4A und 4B sind ferner zwei Varianten einer dritten Ausführungsform mit einem Interferenzfilter 300 bzw. zwei Interferenzfiltern 300, 300' dargestellt. Diese Filter befinden sich jeweils innenliegend im Polymerkörper des Dokuments 100. Der den RFID-Chip 200 einseitig abdeckende Filter 300 schützt dessen Vorderseite 201 (Fig. 4A), und die beiden den RFID-Chip beidseitig abdeckenden Filter 300, 300' schützen dessen Vorderseite 201 und dessen Rückseite 202 (Fig. 4B). Die Filter sind aus einem dielektrischen optischen Resonator 310, beispielsweise aus Polycarbonat, das für die einfallende Strahlung transparent ist, und zwei an dessen Seiten angeordnete teildurchlässige Metallschichten 311, 312, beispielsweise aus Aluminium, gebildet. Die Dicke des optischen Resonators bestimmt das Frequenzband der ausgefilterten Strahlung. Im Falle der hier eingestrahlten Infrarotstrahlung ist die dielektrische Schicht ca. 1,5 µm dick.

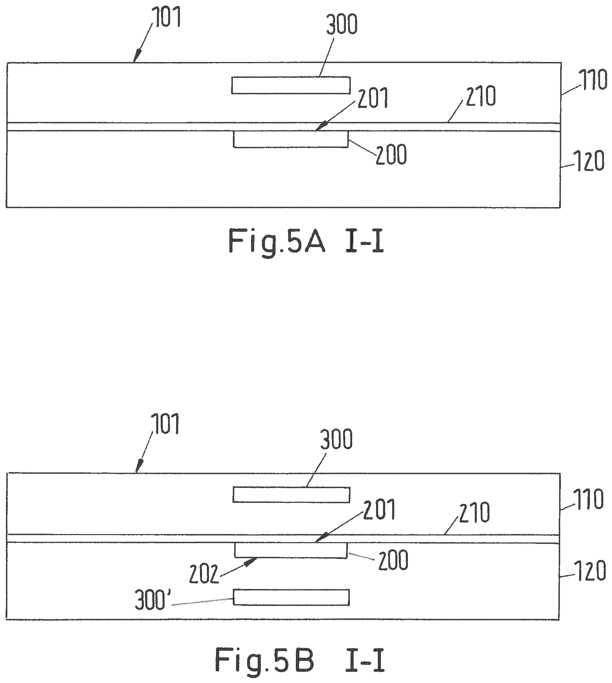

In Fig. 5A und 5B sind ferner zwei Varianten einer vierten Ausführungsform mit einem Volumenhologramm 300 bzw. mit zwei Volumenhologrammen 300, 300' dargestellt. Das den RFID-Chip 200 einseitig abdeckende Hologramm 300 schützt dessen Vorderseite 201 (Fig. 5A), und die beiden den RFID-Chip beidseitig abdeckenden Hologramme 300, 300' schützen dessen Vorderseite 201 und dessen Rückseite 202 (Fig. 5B). Diese Hologramme sind in üblicher Art und Weise aus strahlungsempfindlichem Material hergestellt, das sich auf einem Träger befindet (nicht separat dargestellt). Dieser Träger mit dem darauf befindlichen Hologramm wird beim Laminieren in das Dokument 100 integriert.

## Patentansprüche

1. Wert- und/oder Sicherheitsprodukt (100), enthaltend mindestens einen in das Wert- und/oder Sicherheitsprodukt (100) eingebetteten ungehäusten Halbleiter-Chip (200) sowie mindestens ein Schutzelement (300, 300') für den ungehäusten Halbleiter-Chip (200) gegen durch mindestens eine Außenseite (101) des Wert- und/oder Sicherheitsproduktes (100) einfallende elektromagnetische Strahlung, **dadurch gekennzeichnet, dass** das mindestens eine Schutzelement (300, 300') durch einen Interferenzfilter für die eingestrahlte elektromagnetische Strahlung gebildet ist.

2. Wert und/oder Sicherheitsprodukt (100) nach Anspruch 1, **dadurch gekennzeichnet, dass** das mindestens eine Schutzelement (300, 300') die Einstrahlung elektromagnetischer Strahlung zumindest mit einer Wellenlänge von größer als 800 nm verhindert.

3. Wert- und/oder Sicherheitsprodukt (100) nach einem der vorstehenden Ansprüche, **dadurch gekennzeichnet, dass** das mindestens eine Schutzelement (300, 300') in einer den mindestens einen Halbleiter-Chip (200) einseitig abdeckenden Position angeordnet ist.

4. Wert- und/oder Sicherheitsprodukt (100) nach einem der vorstehenden Ansprüche, **dadurch gekennzeichnet, dass** das Wert- und/oder Sicherheitsprodukt (100) mindestens zwei Schutzelemente (300, 300') enthält, von denen jeweils mindestens eines (300) in einer den Halbleiter-Chip (200) auf dessen Vorderseite (201) und jeweils mindestens eines (300') in einer den Halbleiter-Chip (200) auf dessen Rückseite (202) abdeckenden Position angeordnet sind.

5. Wert- und/oder Sicherheitsprodukt (100) nach einem der vorstehenden Ansprüche, **dadurch gekennzeichnet, dass** das mindestens eine Schutzelement (300, 300') in einer in dem Wert- und/oder Sicherheitsprodukt (100) innenliegenden Ebene angeordnet ist.

## Claims

1. Valuable and/or security product (100), comprising at least one unhoused semiconductor chip (200) embedded in the valuable and/or security product (100), as well as at least one protective element (300, 300') for the unhoused semiconductor chip (200) against incident electromagnetic radiation through at least one outer side (101) of the valuable and/or security product (100), **characterised in that** the at least one protective element (300, 300') is formed by an interference filter for the incident electromagnetic radiation.

2. Valuable and/or security product (100) according to claim 1, **characterised in that** the at least one protective element (300, 300') prevents the intrusion of electromagnetic radiation at least with a wavelength of greater than 800 nm.

3. Valuable and/or security product (100) according to any one of the preceding claims, **characterised in that** the at least one protective element (300, 300') is arranged in a position which covers the at least one semiconductor chip (200) on one side.

4. Valuable and/or security product (100) according to any one of the preceding claims, **characterised in that** the valuable and/or security product (100) contains at least two protective elements (300, 300'), of which in each case at least one (300) is arranged in a position covering the semiconductor chip (200) on its front side (201) and at least one (300') is arranged in a position covering the semiconductor chip (200) on its rear side (202).

5. Valuable and/or security product (100) according to any one of the preceding claims, **characterised in that** the at least one protective element (300, 300') is arranged in a plane lying in the interior of the valuable and/or security product (100).

## Revendications

1. Produit de valeur et/ou de sécurité (100), contenant au moins une puce à semi-conducteur (200) non logée intégrée dans le produit de valeur et/ou de sécurité (100) ainsi qu'au moins un élément de protection (300, 300') pour la puce à semi-conducteur (200) non logée contre un rayonnement électromagnétique incident par au moins une face externe (101) du produit de valeur et/ou de sécurités (100), **caractérisé en ce que** l'au moins un élément de protection (300, 300') est formé par un filtre d'interférences pour le rayonnement électromagnétique pénétrant.

2. Produit de valeur et/ou de sécurité (100) selon la revendication 1, **caractérisé en ce que** l'au moins un élément de protection (300, 300') empêche la pénétration d'un rayonnement électromagnétique au moins avec une longueur d'onde supérieure à 800 nm.

3. Produit de valeur et/ou de sécurité (100) selon l'une quelconque des revendications précédentes, **caractérisé en ce que** l'au moins un élément de protection (300, 300') est disposé à une position recouvrant sur une face l'au moins une puce à semi-conducteur (200).

4. Produit de valeur et/ou de sécurité (100) selon l'une quelconque des revendications précédentes, **caractérisé en ce que** le produit de valeur et/ou de sécurité (100) contient au moins deux éléments de protection (300, 300') parmi lesquels au moins un (300) est disposé respectivement à une position recouvrant la puce à semi-conducteur (200) sur sa face avant (201) et au moins un (300') est disposé respectivement à une position recouvrant la puce à semi-conducteur (200) sur sa face arrière (202).

5. Produit de valeur et/ou de sécurité (100) selon l'une quelconque des revendications précédentes, **caractérisé en ce que** l'au moins un élément de protection (300, 300') est disposé dans un plan situé à l'intérieur du produit de valeur et/ou de sécurité (100).
